# EUROPEAN PATENT APPLICATION

(11) **EP 2 287 711 A1**
(43) Date of publication of application: **23.02.2011**
(21) Application number: 09010101.5
(22) Date of filing: 05.08.2009
(51) Int. Cl.: G06F 3/042

(54) **Extended infrared-sourced multi-touch screen**

(71) Applicant: Nlighten Trading (Shanghai) Co., Xu-Hai District Shanghai, 200233 (CN)
(72) Inventor: Wu, Xin-Min, Shangai (CN); Li, Jian-Guo, Shangai (CN); Ma, Xiao-Qiang, Shangai (CN); Guo, Qing, Shangai (CN)
(74) Representative: Winkler, Andreas Fritz Ernst

(57) **Abstract**

This invention provides an extended infrared-sourced multi-touch screen, comprising: a display module; at least an infrared (IR) source set in adjacent to a display module as the light source of the multi-touch screen; at least a beam expander optical apparatus being responsive to the at least an IR source to form an IR flat-field line pattern; at least an IR receiver set corresponding to said at least a beam expander optical apparatus to receive IR light emitted by the at least an IR source and to receive IR light from an object when said display module being touched; and a positioning module being responsive to said at least an infrared receiver to process coordinate positioning after the touch action is detected by the at least an IR receiver.

## Description

### TECHNICAL FIELD

Embodiments of the invention generally relate to the field of a touch screen. More specifically, the present invention relates to the field of an extended infrared-sourced multi-touch screen.

### BACKGROUND

Recently, various kinds of electronic products are developing in a way towards user-friendly operation, tiny dimensions, and large-scale screens, especially when it comes to portable electronic products, which are quite demanding on account of dimensions and the scales of screens. Therefore, the touch panel often integrates with the liquid crystal display (LCD) in many electronic products to save the space for a keyboard or control buttons, then enabling the size of a screen to be enlarged.

Up to date, technologies of multi-touch screens mainly include capacitive touch screens, resistive touch screens, optical (imaging) touch screens, etc. Among them the more common types of optical (imaging) touch screens includes two types as following. (1) Infrared (IR) array touch screens: invisible light IR emitters/transmitters (e.g. infrared Light Emitting Diodes, IRLEDs) arranged vertically and horizontally at two sides of the screen frame with invisible light IR receivers (e.g. infrared sensors, IR sensors) arranged at the other two sides. IR touch screens are more appropriate for realizing "single-point touch," but it is more difficult for them to realize "multipoint touch" (no less than 3 touch points). Besides, it will require a large number of IRLEDs which result in more power consumption and can be interfered by the surroundings more easily, and the resolution will be restricted by the arrangement of IRLEDs. (2) Frustrated Total Internal Reflection touch screens: the invisible light of Infrared Emitting Diodes being coupled to a refractive medium, e.g. flat organic glass, and total internal reflection to fill the refractive medium with invisible light. This kind of frustrated total internal reflection touch screens requires the cleanness of the surface of the organic glass demandingly; if there is any dust or oil spot on the surface in practical use, then it may interrupt the light path of internal reflection to form an interfering signal. Moreover, the edges of the screen and the central part of the screen may differ in light intensity, following that the intensity of signals will not be uniform. If it is applied to a large-scale touch screen, the effectiveness is even worse.

Although there are quite a few types of touch panels available on the market, not many of them are able to carry out "multi-touch" technology. Using infrared sensing mechanism to perform a multi-touch screen is even lesser. However, IR modules have the advantages of high efficiency, high durableness, competence to be utilized in a large scale, etc. Accordingly, if IR touch screens are able to realize multipoint touch, it will benefit the industries and users a lot.

Grounded on the high applicability and advantages of IR touch screens, this invention provides an extended IR-sourced multi-touch screen to be applied to various electronic products, and some of the deficiencies in capacitive, resistive, and common infrared types of touch screens, such as high cost, low accuracy, and incompetence of carrying out multi-touch well, can be improved. Furthermore, the extended IR-sourced multi-touch screen is able to overcome the highly demanding cleanness issue of a frustrated total internal reflection touch screen. In this way, the usability and breadth of the application of a touch screen can be increased.

### SUMMARY OF THE INVENTION

It is one object of the present invention to provide an extended infrared-sourced multi-touch system, which comprises: at least an infrared source set in adjacent to a display module to act the light source of the extended infrared-sourced multi-touch system; at least a beam expander optical apparatus being responsive to the at least an infrared source to form an infrared flat-field line pattern; at least an infrared receiver set corresponding to said at least a beam expander optical apparatus to receive infrared light emitted by the at least an infrared source and to receive infrared light from an object when said display module being touched; and a positioning module being responsive to said at least an infrared receiver to process coordinate positioning after a touch action is detected by the at least an infrared receiver.

It is another object of the present invention to disclose an extended IR-sourced multi-touch screen, which comprises: a display module; at least an infrared (IR) source set in adjacent to a display module to act the light source of the extended IR-sourced multi-touch screen; at least a beam expander optical apparatus being responsive to the at least an infrared source to form an infrared flat-field line pattern; at least an infrared receiver set corresponding to said at least a beam expander optical apparatus to receive infrared light emitted by the at least an infrared source and to receive infrared light from an object when said display module being touched; and a positioning module being responsive to said at least an infrared receiver to process coordinate positioning after the touch action is detected.

The extended IR-sourced multi-touch screen disclosed in this invention is able to perform as touch screens of a variety of viewable sizes (e.g. about 3∼200 inches), particularly large-scale screens. In addition, the advantages of aforementioned extended IR-sourced multi-touch screen include low cost, high accuracy and/or precision (seamless), etc.

A detailed description is given in the following embodiments with reference to the accompanying drawings. Other features and advantages of the present invention will become apparent from the following detailed description. It should be understood, however, that the detailed description and the specific examples, while indicating the preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

Embodiments of the invention are illustrated by way of example, not by way of limitation, and the following figures relate particularly to the preferred embodiments of the present invention. Like reference numerals refer to corresponding parts throughout the several views of the drawings.

Figure 1 shows a schematic diagram of an extended infrared-sourced multi-touch screen in accordance with a preferred embodiment of the invention;

Figure 2 shows a schematic diagram of an infrared source, a beam expander optical apparatus, and the resulting infrared flat-field line pattern in accordance with an embodiment of the invention; and

Figure 3 shows a schematic diagram of an infrared source and the infrared flat-field line pattern formed via the beam expander optical apparatus in accordance with an embodiment of the invention.

### DETAILED DESCRIPTION

In order to fully understand the manner in which the above-recited details and other advantages and objects according to the invention are obtained, a more detailed description of the invention will be rendered by reference to the best-contemplated mode and specific embodiments thereof. The following description of the invention is made for the purpose of illustrating the general principles of the invention and should not be taken in a limiting sense; it is intended to illustrate various embodiments of the invention. As such, the specific modifications discussed are not to be construed as limitations on the scope of the invention. It will be apparent to one skilled in the art that various equivalents, changes, and modifications may be made without departing from the scope of the invention, and it is understood that such equivalent embodiments are to be included herein.

The terminology used in the description presented below is intended to be interpreted in its broadest reasonable manner, even though it is being used in conjunction with a detailed description of certain specific embodiments of the invention. Certain terms may even be emphasized below; however, any terminology intended to be interpreted in any restricted manner will be overtly and specifically defined as such in this detailed description section.

Where the context permits, singular or plural terms may also include the plural or singular term, respectively. Moreover, unless the word "or" is expressly limited to mean only a single item exclusive from the other items in a list of two or more items, then the use of "or" in such a list is to be interpreted as including (a) any single item in the list, (b) all of the items in the list, or (c) any combination of items in the list.

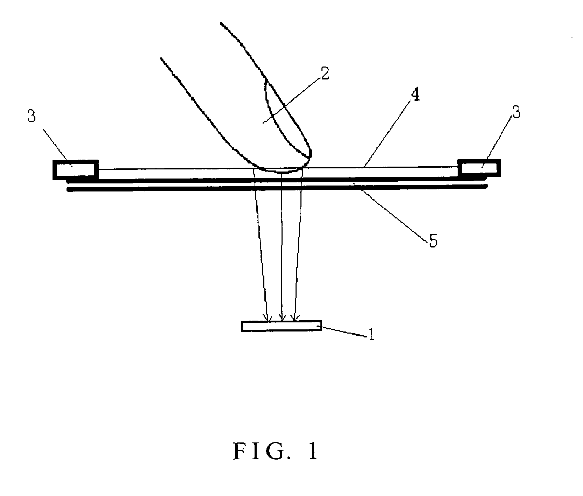

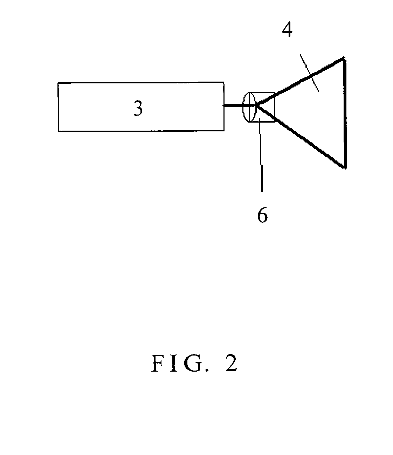

As indicated in Figure 1 and Figure 2, one preferred embodiment of the invention shows an extended infrared-sourced multi-touch system 100 integrated with a display module 5 to form an extended infrared-sourced multi-touch screen, wherein the extended IR-sourced multi-touch system 100 comprises: at least an infrared (IR) source 3 set in adjacent to a display module to act the light source of the extended IR-sourced multi-touch system 100; at least a beam expander optical apparatus 6 being responsive to the at least an infrared source 3 to form an infrared flat-field line pattern 4; at least an infrared receiver 1 set corresponding to said at least a beam expander optical apparatus 6 to receive IR light emitted by the at least an infrared source 3 and to receive IR light from an object when the display module being touched; and a positioning module (not shown) being responsive to the at least an infrared receiver 1 to process coordinate positioning after the touch action is detected by the at least an IR receiver 1. In one preferred embodiment, the method for carrying out the multi-touch coordinate positioning can be that the at least an IR receiver 1 receives the image formed after the touch by the finger(s) 2, and then the positioning module will compute the information about the image via multi-touch algorithm, calculating the position of each point touched accurately and/or precisely. While in use, the at least an IR receiver 1 is always receiving the image formed after the touch, followed by the positioning module always computing the position of each point touched via multi-touch algorithm, thus bringing the multipoint touch into action. The object used to touch the touch screen is not limited to a finger 2, but it may include any parts of a body, stylus pens, pen-like objects, any objects suitable to be used on touch screens, or any objects able to reflect IR light.

In one embodiment of the invention, the extended IR-sourced multi-touch system 100 can be integrated with any display module 5 to form an extended IR-sourced multi-touch screen, wherein the display module 5 may include, but not limited to, a liquid crystal display (LCD) module, a transmissive LCD module, a reflective LCD module, a transflective/transreflective LCD module, a plasma display module, a flat panel display module, an electroluminescence display module, an organic electroluminescence display module, a cathode-ray tube (CRT) display module, or the like. In one preferred embodiment, the display module 5 is a liquid crystal display (LCD) module. Moreover, the display module 5 integrated with the extended IR-sourced multi-touch system 100 may form the touch screens of various sizes or thicknesses, which may include, but not limited to, the resulting touch screens of about 3∼200 inches. The extended IR-sourced multi-touch system 100 is able to be configured corresponding to the sizes or thicknesses of the display to form a proper extended infrared-sourced multi-touch screen to carry out single-point touch or multipoint touch.

In one embodiment, the at least an infrared source 3, which is contained in the extended infrared-sourced multi-touch system 100, is located at any one or more positions around the edges or the corners of the extended IR-sourced multi-touch screen, wherein the infrared source 3 may include, but not limited to, infrared line light sources, infrared laser, infrared laser diodes, infrared laser light emitting elements, infrared light emitting diodes (IRLED or IRED), infrared light emitting elements, or the like. In one preferred embodiment of the invention, the infrared source 3 is the infrared light emitting diode (IRLED or IRED) or the infrared laser diode.

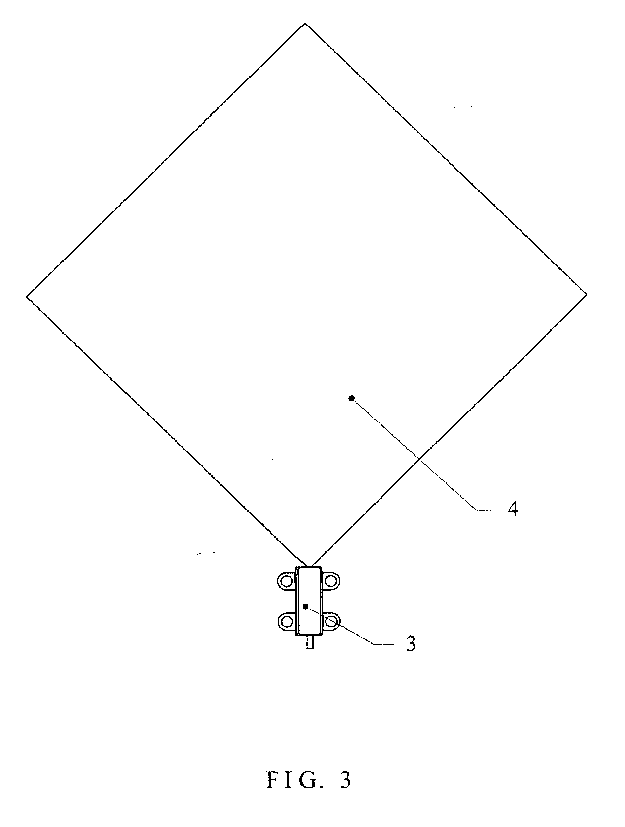

Referring to Figures 2 and 3 in accordance with one embodiment of the invention, the at least a beam expander optical apparatus 6, which is used in the extended infrared-sourced multi-touch system 100, can be a beam expander optical apparatus (or system) of the IR source 3 to form an IR flat-field line pattern. The at least a beam expander optical apparatus 6 may include, but not limited to, Powell lenses, cylindrical lenses, line-generating prisms or lenses, line generator optical apparatus, or the like. For example, any beam expander optical apparatus, e.g. prisms or lenses, that can optimally generate a flat-field line pattern of uniform density, high stability, and good linearity after the laser beam (such as 1 mm) passes through the aspheric lens thereof is competent to be utilized herein. In one preferred embodiment, the at least a beam expander optical apparatus 6 is a Powell lens. Because the line-generating capability of Powell lenses may be better than that of cylindrical lenses, Powell lenses are able to avoid some weaknesses of the Gaussian lines of light which are **characterized in that** they have a bright center and fading extremities. In other words, the intensity of a Gaussian line of light fades away towards the ends of the line.

In a preferred embodiment, the at least an infrared receiver 1 which is contained in the extended IR-sourced multi-touch system 100 includes, but not limited to, a charge coupled device (CCD), a complementary metal oxide semiconductor (CMOS), or the like. Grounded on the wavelengths of the light emitted by the IRLEDs or IR laser emitting elements functioning as the IR source 3, the IR receiver 1, e.g. a CCD or CMOS, may further comprise a color filter corresponding to the wavelengths thereof. While there is a finger 2 or any other object capable of reflecting IR approaching or pressing against the surface, the IR light is reflected and thus the reflected IR is received by the IR receiver 1, such as a CCD or CMOS. The image received by the IR receiver 1 will be processed by the positioning module contained in the multi-touch system 100, wherein the controller of the positioning module may process the image via multi-touch algorithm and/or software and calculate the coordinate(s) (x,y) of the finger(s) 2. Consequently, not only can one coordinate (x,y) of one finger 2 be located by the touch screen comprising the extended IR-sourced multi-touch system 100, but also a plurality of coordinates (x₁,y₁), (x₂,y₂), (x₃,y₃), ..., of fingers 2 can be located by the touch screen, hence carrying out the single-point touch or multipoint touch.

In one embodiment, the at least an infrared receiver 1 and the at least an infrared source 3 of the multi-touch system 100 are positioned at the same plane. In another embodiment, the at least an infrared receiver 1 and the at least an infrared source 3 of the multi-touch system 100 are positioned at different planes.

In one embodiment, the light produced by the at least an IR source 3 of the extended IR-sourced multi-touch system 100 is of wavelengths about 700∼1250 nanometer (nm).

In one preferred embodiment, as depicted in Figure 1, the present invention provides an extended infrared-sourced multi-touch screen, which comprises: a display module 5; at least an infrared source 3 set in adjacent to a display module 5, e.g. 1∼10 mm, to be the light source of the extended infrared-sourced multi-touch screen; at least a beam expander optical apparatus 6 being responsive to the at least an IR source 3 to form an infrared flat-field line pattern 4; at least an infrared receiver 1 set corresponding to said at least a beam expander optical apparatus to receive infrared light emitted by the at least an IR source 3 and to receive IR light from an object when said display module being touched; and a positioning module (not shown) being responsive to said at least an infrared receiver to process coordinate positioning after action is detected by the at least an IR receiver 1. In one preferred embodiment, the method for carrying out the multi-touch coordinate positioning can be that the IR receiver 1 receives the image formed after the touch by the finger(s) 2, and then the positioning module will compute the information about the image via multi-touch algorithm, calculating the position of each point touched accurately and/or precisely. While in use, the IR receiver 1 is always receiving the image formed after the touch, followed by the positioning module always computing the position of each point touched via multi-touch algorithm, thus bringing the multipoint touch into action. The object used to touch the touch screen is not limited to a finger 2, but it may include any parts of a body, stylus pens, pen-like objects, any objects suitable to be used on touch screens, or any objects able to reflect infrared light.

In one embodiment of the invention, the display module 5 of the aforementioned extended IR-sourced multi-touch screen may include, but not limited to, a liquid crystal display (LCD) module, a transmissive LCD module, a reflective LCD module, a transflective/transreflective LCD module, a plasma display module, a flat panel display module, an electroluminescence display module, an organic electroluminescence display module, a cathode-ray tube (CRT) display module, or the like. In one preferred embodiment, the display module 5 is a liquid crystal display (LCD) module. Additionally, the extended IR-sourced multi-touch screen comprising the display module 5 may become the multi-touch screens of various sizes or thicknesses, which may include, but not limited to, the resulting multi-touch screens of about 3∼200 inches.

In one embodiment, the at least an infrared source 3, which is contained in the extended IR-sourced multi-touch screen, is located at any one or more positions around the edges or the corners of the extended IR-sourced multi-touch screen, wherein the infrared source 3 may include, but not limited to, infrared line light sources, infrared laser, infrared laser diodes, infrared laser light emitting elements, infrared light emitting diodes (IRLED or IRED), infrared light emitting elements, or the like. In one preferred embodiment of the invention, the IR source 3 is the infrared light emitting diode (IRLED or IRED) or the IR laser diode.

Referring to Figures 2 and 3 in accordance with one embodiment of the invention, the at least a beam expander optical apparatus 6, which is applied to the extended IR-sourced multi-touch screen, can be a beam expander optical apparatus (or system) of the infrared source 3 to form an IR flat-field line pattern. The at least a beam expander optical apparatus 6 may include, but not limited to, Powell lenses, cylindrical lenses, line-generating prisms or lenses, line generator optical apparatus, or the like. For example, any beam expander optical apparatus, e.g. prisms or lenses, that can optimally generate a flat-field line pattern of uniform density, high stability, and good linearity after the laser beam (such as 1 mm) passes through the aspheric lens thereof is competent to be utilized herein. In one preferred embodiment, the at least a beam expander optical apparatus 6 is a Powell lens. Because the line-generating capability of Powell lenses may be better than that of cylindrical lenses, Powell lenses are able to avoid some shortcomings of the Gaussian lines of light which are **characterized in that** they have a bright center and fading extremities. In other words, the intensity of a Gaussian line of light fades away towards the ends of the line.

In a preferred embodiment, the at least an infrared receiver 1 which is contained in the extended IR-sourced multi-touch screen includes, but not limited to, a charge coupled device (CCD), a complementary metal oxide semiconductor (CMOS), or the like. Based on the wavelengths of the light emitted by the IRLEDs or IR laser emitting elements functioning as the IR source 3, the IR receiver 1, e.g. a CCD or CMOS, may further comprise a color filter corresponding to the wavelengths thereof. While there is a finger 2 or any other object capable of reflecting IR approaching or pressing against the surface, the IR light is reflected and accordingly the reflected IR is received by the IR receiver 1, such as a CCD or CMOS. The image received by the IR receiver 1 will be processed by the positioning module contained in the multi-touch screen, wherein the controller of the positioning module may process the image via multi-touch algorithm and/or software and calculate the coordinate(s) (x,y) of the finger(s) 2. As a result, not only can one coordinate (x,y) of one finger 2 be located by the extended IR-sourced multi-touch screen, but also a plurality of coordinates (x₁,y₁), (x₂,y₂), (x₃,y₃), ..., of fingers 2 can be located by the multi-touch screen, therefore carrying out the single-point touch or multipoint touch.

In one embodiment, the at least an infrared receiver 1 and the at least an infrared source 3 of the extended IR-sourced multi-touch screen are positioned at the same plane. In another embodiment, the at least an infrared receiver 1 and the at least an infrared source 3 of the extended IR-sourced multi-touch screen are positioned at different planes.

In one embodiment, the light produced by the at least an infrared source 3 of the extended IR-sourced multi-touch screen is of wavelengths about 700∼1250 nm.

To sum up, with respect to the above description, it is to be understood that the optimal dimensional specifications for the parts of the invention, including variations in number, size, shape, form, placement, material and the method of fabrication and assembly, are deemed readily apparent to a person having ordinary skill in the art upon reading the foregoing description, and all equivalent specifications to those illustrated in the drawings and detailed in the description are intended to be encompassed by the present invention.

The foregoing description, for purposes of explanation, was set forth in specific details of the preferred embodiments to provide a thorough understanding of the invention. However, it will be apparent to one skilled in the art that specific details are not required in order to practice the invention. Therefore, the foregoing descriptions of specific embodiments of the invention are presented for purposes of illustration and description only and should not be construed in any way to limit the scope of the invention. They are not intended to be exhaustive or to limit the invention to the precise forms disclosed; obviously, many modifications and variations are possible in view of the above teachings. The embodiments were chosen and described in order to best explain the principles of the invention and its practical applications, thereby enabling others skilled in the art to best utilize the invention and various embodiments with various modifications as are suited to the particular use contemplated. It is intended that the following Claims and their equivalents define the scope of the invention.

## Claims

1. An extended infrared-sourced multi-touch system(100), **characterized by** comprising:
at least an infrared source(3) set in adjacent to a display module(5) to act the light source of said extended infrared-sourced multi-touch system(100);
at least a beam expander optical apparatus(6) being responsive to said at least an infrared source(3) to form an infrared flat-field line pattern(4);
at least an infrared receiver(1) set corresponding to said at least a beam expander optical apparatus(6) to receive infrared light emitted by said at least an infrared source(3) and to receive infrared light from an object when said display module(5) being touched; and
a positioning module being responsive to said at least an infrared receiver(1) to process coordinate positioning after said touch action is detected by said at least an infrared receiver(1).

2. The extended infrared-sourced multi-touch system(100) of claim 1, **characterized by** further comprising a display module(5) integrated with said extended infrared-sourced multi-touch system(100) to form an extended infrared-sourced multi-touch screen, wherein said display module(5) includes a liquid crystal display (LCD) module, a transmissive LCD module, a reflective LCD module, a transflective/transreflective LCD module, a plasma display module, a flat panel display module, an electroluminescence display module, an organic electroluminescence display module, a cathode-ray tube (CRT) display module, or the like.

3. The extended infrared-sourced multi-touch system(100) of claim 2, **characterized in that** said at least an infrared source(3) is located at any one or more positions around the edges or the corners of said extended infrared-sourced multi-touch screen.

4. The extended infrared-sourced multi-touch system(100) of claim 1, **characterized in that** said at least an infrared source(3) includes infrared line light sources, infrared laser, infrared laser diodes, infrared laser light emitting elements, infrared light emitting diodes, infrared light emitting elements, or the like.

5. The extended infrared-sourced multi-touch system(100) of claim 1, **characterized in that** said at least a beam expander optical apparatus(6) includes Powell lenses, cylindrical lenses, line-generating prisms or lenses, line generator optical apparatus, or the like.

6. The extended infrared-sourced multi-touch system(100) of claim 1, **characterized in that** said at least an infrared receiver(1) includes a charge coupled device (CCD), a complementary metal oxide semiconductor (CMOS), or the like.

7. The extended infrared-sourced multi-touch system(100) of claim 1, **characterized in that** said at least an infrared receiver(1) further comprises a color filter.

8. The extended infrared-sourced multi-touch system(100) of claim 1, **characterized in that** said at least an infrared receiver(1) and said at least an infrared source(3) are positioned at the same plane or different planes.

9. An extended infrared-sourced multi-touch screen, **characterized by** comprising:
a display module(5);
at least an infrared source(3) set in adjacent to a display module(5) to be the light source of said extended infrared-sourced multi-touch screen;
at least a beam expander optical apparatus(6) being responsive to said at least an infrared source(3) to form an infrared flat-field line pattern(4);
at least an infrared receiver(1) set corresponding to said at least a beam expander optical apparatus(6) to receive infrared light emitted by said at least an infrared source(3) and to receive infrared light from an object when said display module(5) being touched; and
a positioning module being responsive to said at least an infrared receiver(1) to process coordinate positioning after said touch based on an image formed after said touch action is detected by said at least an infrared receiver(1).

10. The extended infrared-sourced multi-touch screen of claim 9, **characterized in that** said at least an infrared source(3) is located at any one or more positions around the edges or the corners of said extended infrared-sourced multi-touch screen.

11. The extended infrared-sourced multi-touch screen of claim 9, **characterized in that** said display module(5) includes a liquid crystal display (LCD) module, a transmissive LCD module, a reflective LCD module, a transflective/transreflective LCD module, a plasma display module, a flat panel display module, an electroluminescence display module, an organic electroluminescence display module, a cathode-ray tube (CRT) display module, or the like.

12. The extended infrared-sourced multi-touch screen of claim 9, **characterized in that** said at least an infrared source(3) includes infrared line light sources, infrared laser, infrared laser diodes, infrared laser light emitting elements, infrared light emitting diodes, infrared light emitting elements, or the like.

13. The extended infrared-sourced multi-touch screen of claim 9, **characterized in that** said at least a beam expander optical apparatus(6) includes Powell lenses, cylindrical lenses, line-generating prisms or lenses, line generator optical apparatus, or the like.

14. The extended infrared-sourced multi-touch screen of claim 9, **characterized in that** said at least an infrared receiver(1) includes a charge coupled device (CCD), a complementary metal oxide semiconductor (CMOS), or the like; and said at least an infrared receiver 1 further comprises a color filter.

15. The extended infrared-sourced multi-touch screen of claim 9, **characterized in that** said at least an infrared receiver(1) and said at least an infrared source(3) are positioned at the same plane or different planes.

## Amended claims

### Amended claims in accordance with Rule 137(2) EPC.

**1.** An extended infrared-sourced multi-touch system(100), **characterized by** comprising:
at least an infrared source(3) set in adjacent to a display module(5) to act the light source of said extended infrared-sourced multi-touch system(100);
at least a beam expander optical apparatus(6) being responsive to said at least an infrared source(3) to form an infrared flat-field line pattem(4);
at least an infrared receiver(1) set corresponding to said at least a beam expander optical apparatus(6) to receive infrared light emitted by said at least an infrared source(3) and to receive infrared light from an object when said display module(5) being touched;
and a positioning module being responsive to said at least an infrared receiver(1) to process coordinate positioning after said touch action is detected by said at least an infrared receiver(1).

**2.** The extended infrared-sourced multi-touch system(100) of claim 1, **characterized by** further comprising a display module(5) integrated with said extended infrared-sourced multi-touch system(100) to form an extended infrared-sourced multi-touch screen, wherein said display module(5) includes a liquid crystal display (LCD) module, a transmissive LCD module, a reflective LCD module, a transflective/transreflective LCD module, a plasma display module, a flat panel display module, an electroluminescence display module, an organic electroluminescence display module, a cathode-ray tube (CRT) display module, or the like.

**3.** The extended infrared-sourced multi-touch system(100) of claim 2, **characterized in that** said at least an infrared source(3) is located at any one or more positions around the edges or the corners of said extended infrared-sourced multi-touch screen.

**4.** The extended infrared-sourced multi-touch system(100) of claim 1, **characterized in that** said at least an infrared source(3) includes infrared line light sources, infrared laser, infrared laser diodes, infrared laser light emitting elements, infrared light emitting diodes, infrared light emitting elements, or the like.

**5.** The extended infrared-sourced multi-touch system(100) of claim 1, **characterized in that** said at least a beam expander optical apparatus(6) includes Powell lenses, cylindrical lenses, line-generating prisms or lenses, line generator optical apparatus, or the like.

**6.** The extended infrared-sourced multi-touch system(100) of claim 1, **characterized in that** said at least an infrared receiver(1) includes a charge coupled device (CCD), a complementary metal oxide semiconductor (CMOS), or the like.

**7.** The extended infrared-sourced multi-touch system(100) of claim 1, **characterized in that** said at least an infrared receiver(1) further comprises a color filter.

**8.** The extended infrared-sourced multi-touch system(100) of claim 1, **characterized in that** said at least an infrared receiver(1) and said at least an infrared source(3) are positioned at the same plane or different planes.
